# EUROPEAN PATENT SPECIFICATION

(11) **EP 4 029 716 B1**
(45) Date of publication and mention of the grant of the patent: **05.03.2025**
(21) Application number: 22150525.8
(22) Date of filing: 07.01.2022
(51) Int. Cl.: B60K 35/10

(54) **VEHICLE INTERACTIVE SYSTEM AND METHOD, STORAGE MEDIUM, AND VEHICLE**
INTERAKTIVES FAHRZEUGSYSTEM UND -VERFAHREN, SPEICHERMEDIUM UND FAHRZEUG
SYSTÈME ET PROCÉDÉ INTERACTIFS DE VÉHICULE, SUPPORT DE STOCKAGE ET VÉHICULE

(30) Priority: 08.01.2021 CN 202110024709
(43) Date of publication of application: 20.07.2022
(73) Proprietor: Nio Technology (Anhui) Co., Ltd, Hefei City, Anhui 230601 (CN)
(72) Inventor: Lv, Chao, Hefei City, Anhui 230601 (CN); Chen, Xiaoyan, Hefei City, Anhui 230601 (CN); Wang, Shiting, Hefei City, Anhui 230601 (CN)
(74) Representative: Vossius & Partner Patentanwälte Rechtsanwälte mbB

(56) References cited:
- US-A1- 2008 084 539
- US-A1- 2019 354 178
- US-A1- 2020 207 358

## Description

### Technical Field

The invention relates to the technical field of intelligent driving. Specifically, the invention relates to a vehicle interactive system and method, a storage medium, and a vehicle.

### Background Art

In the rapidly developing modern automobile industry, it is of great significance to improve experience of and friendliness to automobile users. With the improvement of vehicle configurations, more and more vehicles are equipped with various devices for human-computer interaction, such as a voice assistant, a center console screen, and an artificial intelligence (AI) interactive apparatus. These devices enable a driver to conveniently perform setting and communication (for example, navigation, music playing, and air conditioning temperature setting) on a vehicle. US 2020/207358 A1 directs to a contextual driver monitoring system. In one implementation, one or more first inputs are received. The one or more first inputs are processed to identify a first object in relation to a vehicle. One or more second inputs are received. The one or more second inputs are processed to determine, based on one or more previously determined states of attentiveness associated with the driver of the vehicle in relation to one or more objects associated with the first object, a state of attentiveness of a driver of the vehicle with respect to the first object. One or more actions are initiated based on the state of attentiveness of a driver. US 2019/354178 A1 directs to an artificial intelligence device capable of being controlled according to user action includes a display, a camera configured to capture an image of a user, and a processor configured to acquire first user action information based on the captured image, change an operation state of the artificial intelligence device from an inactive state to an active state when the acquired first user action information is predetermined action information, display a cursor at a position corresponding to a gaze of the user through the display based on the captured image, acquire second user action information, and select an item corresponding to the position of the cursor based on the acquired second user action information. US 2008/084539 A1 provides a coordinate input system, some embodiments having a first waveguide carrying stimulating light which is coupled by a force normal to the surface of the first waveguide into a second waveguide. In certain embodiments, the second waveguide contains photoluminescent material which upon receiving light from the first waveguide emits light which is detected by provided photosensors. Additionally, devices and methods for gaze tracking are provided having a probe element forming a probe image, an incident light sensing element for measuring the distribution of light incident at the location of the probe image, modulation and demodulation elements for distinguishing reflections of the probe image from extraneous light, and a comparison element for comparing the distribution of incident light to the probe image. The device is applicable to a gaze tracking apparatus which provides data useful in the field of user interfaces.

However, in a use process of the above devices and their related functions, a user usually needs to perform certain actions (for example, speaking certain words, or touching or pressing a button) to enable and disable these devices or their functions, which may affect driving operations and slow down responses.

### Summary of the Invention

The invention is defined by the independents claims 1 and 7. Further additional embodiments are defined by the dependent claims.

### Brief Description of the Drawings

The above-mentioned and/or other aspects and advantages of the invention will become clearer and more comprehensible from the following description of various aspects with reference to the accompanying drawings, and the same or similar units in the accompanying drawings are denoted by the same reference numerals. The accompanying drawings include:
FIG. 1 is a schematic block diagram of a vehicle interactive system 100 according to an embodiment of the invention;
FIG. 2 is a schematic flowchart of a vehicle interactive method 200 according to an embodiment of the invention; and
FIG. 3 is a schematic flowchart of a process of fusing data of a plurality of cameras according to an embodiment of the invention.

### Detailed Description of Embodiments

In this specification, the invention is described more comprehensively with reference to the accompanying drawings showing schematic embodiments of the invention. However, the invention may be implemented in different forms but should not be construed as being limited to the embodiments herein. The embodiments provided herein are intended to make the invention of this specification comprehensive and complete, to more comprehensively convey the scope of protection of the invention to those skilled in the art.

The terms such as "include" and "comprise" indicate that in addition to the units and steps that are directly and clearly described in the specification and the claims, other units and steps that are not directly or clearly described are not excluded in the technical solutions of the invention. The terms such as "first" and "second" are not used to indicate sequences of units in terms of time, space, size, etc., and are only used to distinguish various units.

The invention is described below with reference to flowchart descriptions, block diagram and/or flowchart of the method and system according to the embodiments of the invention. It should be understood that each block of these flowchart descriptions and/or the block diagram, and combinations of the flowchart descriptions and/or the block diagram, can be implemented by computer program instructions. These computer program instructions can be provided to a processor of a general-purpose computer, dedicated computer, or another programmable data processing device to form a machine, so that the instructions executed by the processor of the computer or the another programmable data processing device create components for implementing the functions/operations specified in these flowcharts and/or blocks and/or one or more flow block diagrams. It should also be noted that in some alternative implementations, the functions/operations shown in the blocks may not occur in the order shown in the flowchart. For example, two blocks shown in sequence may actually be executed substantially simultaneously or the blocks may sometimes be executed in a reverse order, depending on the functions/operations involved.

Various embodiments provided in the present invention may be implemented by hardware, software, or a combination of hardware and software where applicable. Further, without departing from the scope of the present invention, various hardware components and/or software components described in this specification may be combined into a combined component including software, hardware, and/or both where applicable. Without departing from the scope of the present invention, various hardware components and/or software components described in this specification may be separated into sub-components including software, hardware, or both where applicable. Further, it is assumed that software components may be implemented as hardware components where applicable, and vice versa.

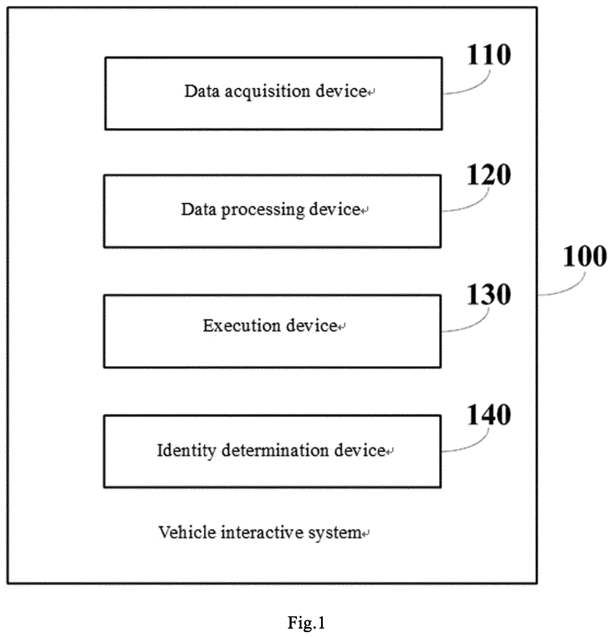

Now refer to FIG. 1. FIG. 1 is a schematic block diagram of a vehicle interactive system 100 according to an embodiment of an aspect of the invention. In FIG. 1, the vehicle interactive system 100 includes a data acquisition device 110, a data processing device 120, and an execution device 130.

In an embodiment, the data acquisition device 110 may be at least one of an image acquisition device and a video acquisition device. Commonly, the image acquisition device and the video acquisition device may be a camera lens and a camera, for example, an analog camera, a digital camera, a night vision camera, an infrared camera, a camera with various fields of view (FOV), etc. For a vehicle, the data acquisition device 110 configured to acquire data of a user in the vehicle may be an in-cabin camera. When a plurality of cameras are used, data fusion can be performed on images acquired by the plurality of cameras, to obtain a more accurate result.

In an embodiment, first data in an image form that is acquired by the data acquisition device 110 may indicate a user intention, for example, an operation that a user expects to perform. The first data may be data about a user line of sight, and may reflect a gaze direction or a line-of-sight direction of the user, changing frequency and a changing manner of the user line of sight, duration in which the user line of sight stays in various positions, time when the user line of sight is away from a device, etc. When a plurality of cameras are used to acquire the data about the user line of sight, data fusion may be performed on a plurality of images, videos, image frames, etc. about the user line of sight, to obtain a more accurate processing result about the user line of sight. The result can optimize vehicle interaction that is performed based on the data about the user line of sight.

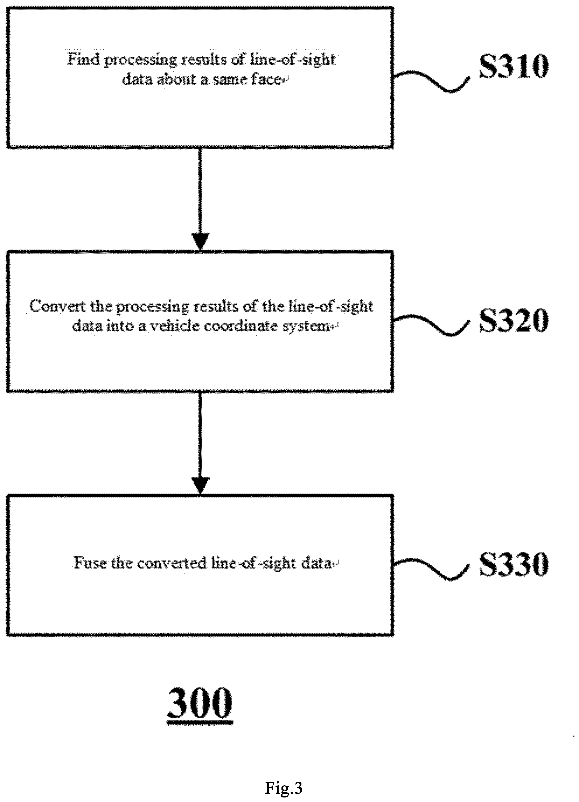

The vehicle interactive system 100 may further include a data processing device 120. In an embodiment, the data processing device 120 may be configured to fuse the data according to a flowchart in FIG. 3. Optionally, if there are a plurality of cameras in a cabin of the vehicle, a set of face and line-of-sight results can be obtained by processing image data (used as first data) acquired by each camera. A better data processing effect can be achieved by fusing the face and line-of-sight results of the plurality of cameras.

In step S310, the data processing device 120 may find line-of-sight data about a same face and processing results of the line-of-sight data from a plurality of groups of camera data. The data processing device 120 may use a face ID algorithm to compare and associate a passenger with face information registered in an existing user account of the vehicle.

For example, the data processing device 120 can perform coordinate system transformation on a face experience size based on external and internal parameters of the cameras, to compute a seat position of a face in a vehicle coordinate system, thereby determining that facial images acquired at a same seat position belong to a same person. In an embodiment, the data processing device 120 can associate a facial image obtained (for example, marked by a face frame) from images with a seat position in the vehicle coordinate system based on the internal and external parameters of the cameras and the seat position in the vehicle, thereby determining whether facial images acquired at a same seat position belong to a same person. Specifically, an association relationship between the facial image and the seat position may be computed as follows: First, the obtained facial image is transformed into the vehicle coordinate system based on the internal and external parameters of the cameras, and which one of a left seat, a middle seat, or a right seat the face frame in the facial image corresponds to is determined through computation. Then, it is assumed that face frames in the facial image respectively correspond to a person in a first-row seat and a person in a second-row seat, and the corresponding face sizes are computed based on this. Finally, the computed face sizes are compared with actual face sizes of 95% of a crowd (for example, a crowd stored in a database or used in design of a vehicle model). Based on a comparison result, it can be considered that a corresponding seat position is correctly assumed for a computed face whose face size is closest to an actual face size. In other words, if a facial image acquired from the first-row seat has a face size closest to the actual face size, it can be considered that a person corresponding to the facial image is in the first-row seat, thereby determining association relationships between people corresponding to the face frames in the facial image and seats in the vehicle.

In step S320, the data processing device 120 may be configured to convert, by using the external parameters of the cameras, a plurality of groups of sight results into the vehicle coordinate system. In step S330, the data processing device 120 may be configured to fuse converted line-of-sight data. For example, line-of-sight data obtained in a pitch direction, a yaw direction, and a roll direction may be separately fused according to a weighting algorithm or a partitioned voting algorithm.

The data processing device 120 may be configured to obtain the user intention based on the first data. For example, when the first data is data about a user line of sight, the data processing device 120 may be configured to: determine a position (for example, a vehicle center console screen, a rear-view mirror, or a vehicle-mounted interactive AI device) at which the user is looking, based on the first data that reflects a gaze direction or a line-of-sight direction of the user, changing frequency and a changing manner of the user line of sight, duration in which the user line of sight stays in various positions, time when the user line of sight is away from a device, etc.; and further obtain the user intention based on this.

The data processing device 120 may further determine, based on various conditions, the position at which the user is looking. For example, the data processing device 120 may set a gaze duration threshold (for example, 1 second or 2 seconds). When duration in which the user gazes at a position reaches the gaze duration threshold, the data processing device 120 may determine that the user is looking at the position. For example, the data processing device 120 may set the number of times the user looks at a position within preset duration. In an implementation, when the number of times the user looks at a left rear-view mirror reaches 2 within the preset duration being 5 seconds, the data processing device 120 may determine that the user is looking at the left rear-view mirror, and obtain a user intention that the user may turn left or change a lane to the left.

A condition for determining a position at which the user gazes may vary depending on actual requirements, instead of being limited to the foregoing two determination conditions. Accordingly, the data processing device 120 may alternatively set, as the case may be, a condition required for obtaining an operation that the user intends to perform. This is not limited in this specification. An algorithm for gaze detection may be a semantic segmentation-based gaze estimation method in Park, S., Spurr, A., and Hilliges, O. (2018). Deep Pictorial Gaze Estimation. In European Conference on Computer Vision (ECCV), pages 741-757, or a method for estimating a gaze direction with auxiliary regression based on a gaze keypoint heat map of landmarks in Seonwook Park, Xucong Zhang, Andreas Bulling, Otmar Hilliges (2018). Learning to find eye region landmarks for remote gaze estimation in unconstrained settings. ACM Symposium on Eye Tracking Research and Applications (ETRA). When a camera installation position is unfavorable for direct gaze estimation, a head pose in Zhu, W. and Deng, H. (2017). Monocular free-head 3d gaze tracking with deep learning and geometry constraints. The IEEE International Conference on Computer Vision (ICCV) may be used together to estimate a line-of-sight direction.

The vehicle interactive system 100 may further include an execution device 130 that may be configured to control a vehicle based on the user intention. For example, after the data processing device 120 determines that the user has the user intention to turn left or change a lane to the left, the execution device 130 may automatically turn on a left turn light based on at least the user intention. The operation of the execution device 130 may be performed not only based on the user intention, but also with reference to another conventional driving operation means in the field of intelligent driving.

The interactive system 100 includes an identity determination device 140 that may be configured to determine a user identity. For example, only a driver is allowed to control some functions or operations on the vehicle. In this case, the vehicle can be controlled accordingly only when a control intention of the driver is sensed.

In addition, the identity determination device 140 may be further configured to determine the user identity based on the first data or second data. The foregoing first data may be image data, video data, etc. In this case, the identity determination device 140 may determine the user identity through image processing, facial detection and recognition, or data comparison, or in another manner. In the case of multiplexing the first data based on the line-of-sight data and face data, a burden on the system can be reduced, and additional work of user data acquisition can be avoided.

In some embodiments, the data acquisition device 110 is configured to acquire the first data in a picture form. The identity determination device 140 is configured to detect a face in the first data. In an embodiment that the driver is required to perform sight control, the identity determination device 140 may be configured to discard the first data and a processing result of the first data when it is detected that the face in the first data is not a facial part of the driver. The identity determination device 140 may be further configured to continue performing acquisition of the first data (namely, sight detection) on the facial part when it is detected that the face in the first data is the facial part of the driver. The data processing device 120 is configured to determine the gaze direction of the user based on the first data about the user line of sight, and further determine the user intention. The execution device 130 is configured to perform corresponding control on the vehicle based on the determined user intention. An algorithm used for facial detection may be a deep learning algorithm. For example, a common algorithm is an MTCNN algorithm.

The second data may be user data other than data acquired by the data acquisition device. For example, the second data may be user fingerprint data, user voiceprint data, a password entered by the user, etc. In this case, another data acquisition device that is independent of or integrated into the data acquisition device 110 is required to acquire data that can reflect the user identity. Certainly, as the case may be, if necessarily, the first data and the second data may alternatively be both used to determine the user identity, thereby obtaining a more accurate user identity determination result.

The following uses several specific embodiments as examples to illustrate configurations of the vehicle interactive system 100 and its various devices according to one aspect of the invention.

In an embodiment, the execution device 130 in the vehicle interactive system 100 is configured to: based on the user intention to interact with a vehicle-mounted artificial intelligence (AI) apparatus, control the AI apparatus to enter an interactive mode, to respond to a user behavior; and based on the user intention to stop interacting with the AI apparatus, control the AI apparatus to enter a non-interactive mode (a function of waking up the AI apparatus based on a line of sight). The AI apparatus can make use of a vehicle-mounted computing capacity and a cloud computing platform, and can integrate a voice interactive system, an intelligent emotion engine, etc., so as to make the vehicle more humanized and also provide the user with a novel human-vehicle interaction mode. In the past, to wake up an AI apparatus, the user needs to press a physical button (for example, a button on a steering wheel), or say a wake-up word (for example, "Hi") or a name that is set for an apparatus to wake up, such that the AI apparatus starts interaction with the user (for example, listening for a user instruction).

The vehicle interactive system 100 according to this embodiment of the invention may use the data about the user line of sight to wake up the AI apparatus, so that the user can control the AI apparatus through eye expressions in addition to hand and voice. In an embodiment, to control the vehicle-mounted AI apparatus, the identity determination device 140 is configured to determine whether an object in an image is the driver. For example, the identity determination device 140 may be configured to perform coordinate system transformation, etc. on the face experience size based on the external and internal parameters of the cameras, to compute the seat position of the face in the vehicle coordinate system (refer to step S310). Therefore, whether a person to which a face in the image belongs is a driver can be determined by determining whether the seat position is a driver's seat position. In addition, the identity determination device 140 may be further configured to determine whether a person is a driver by comparing a passenger with face information in a driver's account that is recorded in the vehicle.

Further, the data processing device 120 may be configured to: compute a line-of-sight region of interest of the user based on a spatial structure parameter (for example, a spatial position of an intelligent instrument screen (IC)/an intelligent center console screen (ICS)/the vehicle-mounted AI apparatus) of the vehicle in combination with the seat position and the first data about the user line of sight, thereby obtaining the user intention. Optionally, in the case of a driver change, a seat adjustment, etc., a personalized line-of-sight self-calibration process can be performed after a driver is in position, to calibrate a correspondence between a line-of-sight angle and a line-of-sight region of interest.

As mentioned above, for example, when it is learned, after the data processing device 120 processes the first data, that the user gazes at the AI apparatus for 1s or longer, the data processing device 120 determines that the user has a user intention to interact with the vehicle-mounted AI apparatus. Therefore, the AI apparatus can be woken up to enter an interactive mode. Then, the AI apparatus (for example, a head part of the AI apparatus) can turn to the user and starts to receive voice, an image, etc. of the user, thereby allowing the user to perform behaviors such as talking to the AI apparatus. In addition, when the user gazes at the AI apparatus but does not speak, the AI apparatus can make a personified expression (for example, making a face), and can enter a non-interactive mode (for example, the AI apparatus can make the head part thereof to move back to a position before a line-of-sight-based wake-up), thereby providing user experience of high efficiency, no interference, and smoothness.

In addition, when the data processing device 120 determines, based on the first data, that a time passing since the user line of sight has returned to a normal driving state reaches certain duration (for example, 10 seconds), the execution device 130 may control the AI apparatus to enter the non-interactive mode (for example, a mode in which the AI apparatus can be turned off or exited from automatically, so that the head part of the AI apparatus is moved back to the position before a line-of- sight-based wake-up), thereby providing user experience of high efficiency, no interference, and smoothness. According to the vehicle interactive system 100 in the invention, the user does not need to say a specific wake-up word or manually press a physical button to activate the vehicle-mounted AI apparatus, such that the wake-up process is more natural and humanized.

In another embodiment, the execution device 130 may be further configured to: when information does not need to be output continuously via a vehicle center console screen, based on the user intention to use the vehicle center console screen, control the vehicle center console screen to wake up or exit from a screen saver mode; and based on the user intention to stop using the vehicle center console screen, control the vehicle center console screen to sleep or enter the screen saver mode (a function of waking up a center console screen based on a line of sight). In a mode, for example, in a navigation mode, in which information needs to be output continuously via the vehicle center console screen, navigation information may be viewed by a driver at high frequency; and in most cases, when the driver views the navigation information, the navigation information needs to be fed back to the driver in time to improve driving safety. Therefore, in this case, the vehicle center console screen may be configured to be continuously on, thereby providing navigation information for the driver in time. However, the driver may alternatively customize the configuration as required, thereby meeting individual needs.

For a user who does not use navigation or even hardly uses the center console screen, keeping the screen on may be dazzling and affect driving. In a common operation, the user may enable, through a manual action or voice, the display screen to sleep or enter the screen saver mode. In the vehicle interactive system 100 according to this embodiment of the invention, to solve or at least alleviate the problem, the data acquisition device 110 may be configured to acquire data about user implementation, and the data processing device 120 may be configured to intelligently and naturally enable, by using a line-of-sight information-based algorithm, the display screen to sleep or enter the screen saver mode.

In an implementation, when the function of waking up a center console screen based on a line of sight is enabled in settings, if the screen saver mode is enabled and when the data processing device 120 determines that duration in which the user gazes at the ICS and the number of times the user gazes at the ICS reach certain conditions, the execution device 130 may control the vehicle center console screen to wake up or exit from the screen saver mode, thereby displaying information for the user. When the center console screen has been woken up, if the data processing device 120 determines that the user does not gaze at the center console screen or does not have an intention to continue using the center console screen for certain duration (for example, 10 seconds), the vehicle center console screen may be controlled to sleep or enter the screen saver mode.

Therefore, the screen saver mode of the vehicle center console screen may be controlled without manual or voice operations, which reduces operation costs and provides experience of seamless vehicle control during driving.

The execution device 130 may be further configured to: based on the user intention to change a vehicle traveling path, control a vehicle external indication device to be enabled (one of auxiliary decision-making functions for automated driving). The vehicle external indication device is a device configured to send an alert or an indication signal to a person who is not on the vehicle. For example, the vehicle external indication device is turn lights on the left and right sides of the vehicle. In one aspect, when the user enables the auxiliary decision-making function for automated driving, if the data processing device 120 detects that the number of times the user looks at a rear-view mirror on one side of the vehicle or duration in which the user looks at a rear-view mirror on one side of the vehicle reaches a certain value, and determines, based on this, that the user wants to change a vehicle traveling path (for example, to change a lane, or make a turn), the execution device 130 may control, just based on this, devices such as a turn light on one side of the vehicle to be turned on. As the case may be, the execution device 130 may alternatively control the vehicle device more accurately in combination with other user operations.

In another aspect, in scenarios related to automated lane-changing and overtaking such as autopilot and navigate on pilot, a driver assistance system may use, as a reference for making a final decision (a vehicle control operation such as changing a lane or making a turn), a behavior that the user gazes at a rear-view mirror on one side of a direction in which a traveling path changes, to view a road condition. If the user does not gaze at a rear-view mirror, the driver assistance system can perform determination based on a manner such as turning on a turn light by the user.

Owing to the auxiliary decision-making function for automated driving, a turn light can be controlled automatically. Therefore, during driver assistance, an operation intention to change a traveling path of the vehicle can be determined even when the user does not turn on the turn light. This frees users' hands to a certain extent, further improves safety and reliability of driver assistance, and realizes experience of natural human-vehicle interaction.

In yet another embodiment, the execution device 130 is further configured to: based on the user intention to use a manner of processing a specific message, process the message in a specific mode (a user message privacy function). In a common configuration, a personal device, such as a mobile phone, of a driver may be connected to the vehicle. Therefore, when the driver receives a call, a voice message, and a text message in a driving process, the message may be processed by a vehicle device via screen display, voice playing, etc., so that the driver does not need to manually operate a personal device. This avoids scenarios in which the driver is distracted and the driver controls the steering wheel with one hand. In addition, with the development of technologies, the vehicle may also receive a message. A source and an acquisition manner of the message are not limited in this specification.

However, in some cases, the vehicle is not just used by an individual or close family members. Because degrees of intimacies between different passengers and a driver are different, not all messages are suitable for public playing or display in a cabin of the vehicle. Therefore, content of the message needs to be processed in a specific manner. When a user information privacy function is enabled, when the vehicle receives a private message (for example, a call, an SMS message, or a social software message) and if the data processing device 120 determines that a line of sight of the driver turns to the ICS, and/or determines that duration in which the driver gazes at the ICS reaches a preset condition, the data processing device 120 determines that the driver wants to process the message via the display screen. The execution device 130 may be configured to perform operations such as displaying a name remark, displaying a phone number, and answering a call, and turning on a loudspeaker; or may be configured to perform operations such as controlling the center console screen to display specific content of a text message, or converting a text message into voice for playing.

If the data processing device 120 determines that the driver does not respond to the message with a line of sight within certain duration, the data processing device 120 determines that the user does not want to disclose the specific content of the message, and the execution device 130 may be configured to skip processing the message (for example, skip displaying detailed content of the message and save the message into a message center, thereby protecting user privacy). In addition, as required, when the driver does not respond to the message with a line of sight or looks at his/her own communications device, the execution device 130 may be configured to play the message via headphones (if the user is wearing headphones) or skip processing the message. In a vehicle with a head-up display (HUD), the execution device 130 may be further configured to display part of the message content on the HUD to assist the user in determining the message content and selecting a message processing manner. Therefore, the vehicle interactive system 100 according to the invention can enhance privacy protection on personal messages of the driver, so as to avoid disclosure of personal privacy information that the driver does not want to disclose.

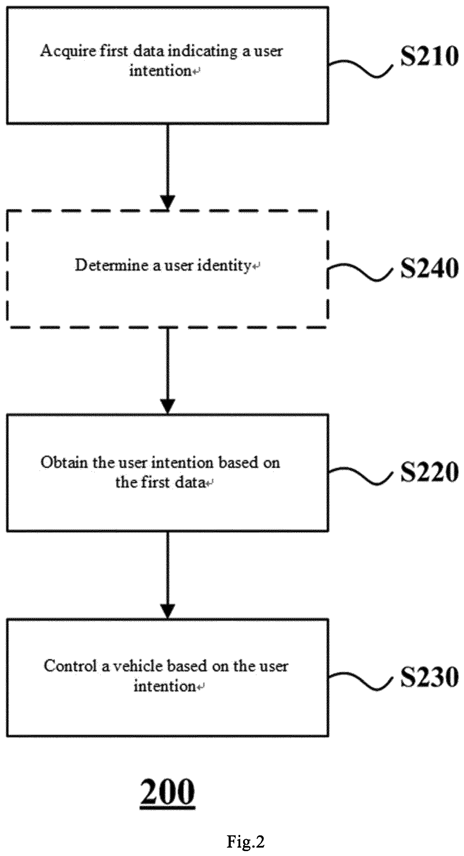

Now refer to FIG. 2, FIG. 2 is a schematic flowchart of a vehicle interactive method 200 according to an embodiment of an aspect of the invention. In FIG. 2, the vehicle interactive method 200 includes a data acquisition step S210, a data processing step S220, and an execution step S230.

In an embodiment, the data acquisition step S210 may be performed by using at least one of the image acquisition device and the video acquisition device described above. For a vehicle, the data acquisition step S210 used to acquire data of a user in the vehicle may be performed by using an in-cabin camera. When a plurality of cameras are used, data fusion can be performed on images acquired by the plurality of cameras, to obtain a more accurate result.

In an embodiment, the first data in an image form that is acquired in the data acquisition step S210 may indicate a user intention, for example, an operation that a user expects to perform. When a plurality of cameras are used in the data acquisition step S210 to acquire the data about the user line of sight, data fusion may be performed on a plurality of images, videos, image frames, etc. about the user line of sight, to obtain a more accurate processing result about the user line of sight. The result can optimize vehicle interaction that is performed based on the data about the user line of sight.

The vehicle interactive method 200 may further include the data processing step S220. In an embodiment, the data processing step S220 includes a data fusion operation shown in the flowchart in FIG. 3. Optionally, if there are a plurality of cameras in a cabin of the vehicle, a set of face and line-of-sight results can be obtained by processing, in the data processing step S220, image data (used as first data) acquired by each camera. A better data processing effect can be achieved by fusing the face and line-of-sight results of the plurality of cameras.

Referring to FIG. 3, in step S310, line-of-sight data about a same face and processing results of the line-of-sight data are found from a plurality of groups of camera data. Then, a face ID algorithm may be used to compare and associate a passenger with face information registered in an existing user account of the vehicle. Alternatively, coordinate system transformation may be performed on a face experience size based on external and internal parameters of the cameras, to compute a seat position of a face in a vehicle coordinate system, thereby determining that facial images acquired at a same seat position belong to a same person. Specific computation and transformation methods are similar to those in the part of step S310 that is described above. Details are not described herein again.

In step S320, the external parameters of the cameras may be used to convert a plurality of groups of sight results into the vehicle coordinate system. In step S330, converted line-of-sight data may be fused. For example, line-of-sight data obtained in a pitch direction, a yaw direction, and a roll direction may be separately fused according to a weighting algorithm or a partitioned voting algorithm.

The data processing step S220 includes obtaining the user intention based on the first data. For example, when the first data is data about a user line of sight, the data processing step S220 includes: determining a position (for example, a vehicle center console screen, a rear-view mirror, or a vehicle-mounted interactive AI device) at which the user is looking, based on the first data that reflects a gaze direction or a line-of-sight direction of the user, changing frequency and a changing manner of the user line of sight, duration in which the user line of sight stays in various positions, time when the user line of sight is away from a device, etc.; and further obtaining the user intention based on this.

The data processing step S220 may further include determining, based on various conditions, the position at which the user is looking. For example, the data processing step may include setting a gaze duration threshold (for example, 1 second or 2 seconds). When duration in which the user gazes at a position reaches the gaze duration threshold, it may be determined that the user is looking at the position. For example, the data processing step may include setting the number of times the user looks at a position within preset duration. In an implementation, when the number of times the user looks at a left rear-view mirror reaches 2 within the preset duration being 5 seconds, the data processing step may include: determining that the user is looking at the left rear-view mirror, and obtaining a user intention that the user may turn left or change a lane to the left.

A condition for determining a position at which the user gazes may vary depending on actual requirements, instead of being limited to the foregoing two determination conditions. Accordingly, the data processing step S220 alternatively includes setting, as the case may be, a condition required for obtaining an operation that the user intends to perform. This is not limited in this specification. An algorithm used for line-of-sight detection may be the various algorithms described above. Therefore, details are not described again.

The vehicle interactive method 200 may further include the execution step S230 that may include controlling a vehicle based on the user intention. For example, after it is determined in the data processing step S220 that the user has the user intention to turn left or change a lane to the left, in the execution step S230, a left turn light may be automatically turned on based on at least the user intention. The execution step S230 may be performed not only based on the user intention, but also with reference to another conventional driving operation means in the field of intelligent driving.

In an embodiment, the vehicle interactive method 200 may further include an identity determination step S240 that includes determining a user identity. For example, only a driver is allowed to control some functions or operations on the vehicle. In this case, the vehicle can be controlled accordingly only when a control intention of the driver is sensed.

In addition, the identity determination step S240 further includes determining the user identity based on the first data or second data. When the first data is image data, video data, etc., the identity determination step S240 may include determining the user identity through image processing, facial detection and recognition, or data comparison, or in another manner. In the case of multiplexing the first data based on the line-of-sight data and face data, a burden on the system can be reduced, and additional work of user data acquisition can be avoided.

In some embodiments, the data acquisition step S210 includes acquiring the first data in a picture form. In this case, the identity determination step S240 includes detecting a face in the first data. In an embodiment that the driver is required to perform sight control, the identity determination step S240 may include discarding the first data and a processing result of the first data when it is detected that the face in the first data is not a facial part of the driver. The identity determination step S240 may further include continuing performing acquisition of the first data (namely, sight detection) on the facial part when it is detected that the face in the first data is the facial part of the driver. The data processing step S220 includes determining the gaze direction of the user based on the first data about the user line of sight, and further determining the user intention. The execution step S230 includes performing corresponding control on the vehicle based on the determined user intention. An algorithm used for facial detection may be a deep learning algorithm. For example, a common algorithm is an MTCNN algorithm.

The second data may be the data described above. As the case may be, if necessarily, the first data and the second data may alternatively be both used in the identity determination step S140 to determine the user identity, thereby obtaining a more accurate user identity determination result.

The following uses several specific embodiments as examples to illustrate configurations of the vehicle interactive method 200 and its various devices according to one aspect of the invention.

In an embodiment, the execution step S230 includes performing a function of waking up the AI apparatus based on a line of sight: based on the user intention to interact with a vehicle-mounted artificial intelligence (AI) apparatus, controlling the AI apparatus to enter an interactive mode, to respond to a user behavior; and based on the user intention to stop interacting with the AI apparatus, controlling the AI apparatus to enter a non-interactive mode. The AI apparatus can make use of a vehicle-mounted computing capacity and a cloud computing platform, and can integrate a voice interactive system, an intelligent emotion engine, etc., so as to make the vehicle more humanized and also provide the user with a novel human-vehicle interaction mode. In the past, to wake up an AI apparatus, the user needs to press a physical button (for example, a button on a steering wheel), or say a wake-up word (for example, "Hi") or a name that is set for an apparatus to wake up, such that the AI apparatus starts interaction with the user (for example, listening for a user instruction).

The vehicle interactive method 200 according to this embodiment of the invention may use the data about the user line of sight to wake up the AI apparatus, so that the user can control the AI apparatus through eye expressions in addition to hand and voice. In an embodiment, to control the vehicle-mounted AI apparatus, the identity determination step S240 includes determining whether an object in an image is the driver. For example, the identity determination step S240 may include performing coordinate system transformation, etc. on the face experience size based on the external and internal parameters of the cameras, to compute the seat position of the face in the vehicle coordinate system (refer to step S310). Therefore, whether a person to which a face in the image belongs is a driver can be determined by determining whether the seat position is a driver's seat position. In addition, the identity determination step S240 may further include determining whether a person is a driver by comparing a passenger with face information in a driver's account that is recorded in the vehicle.

Further, the data processing step S220 may include: computing a line-of-sight region of interest of the user based on a spatial structure parameter (for example, a spatial position of an intelligent instrument screen (IC)/an intelligent center console screen (ICS)/the vehicle-mounted AI apparatus) of the vehicle in combination with the seat position and the first data about the user line of sight, thereby obtaining the user intention. Optionally, in the case of a driver change, a seat adjustment, etc., a personalized line-of-sight self-calibration process can be performed after a driver is in position, to calibrate a correspondence between a line-of-sight angle and a line-of-sight region of interest.

As mentioned above, for example, when it is learned, after the first data is processed in the data processing step S220, that the user gazes at the AI apparatus for 1s or longer, it may be determined that the user has a user intention to interact with the vehicle-mounted AI apparatus. Therefore, the AI apparatus can be woken up to enter an interactive mode. Then, the AI apparatus (for example, a head part of the AI apparatus) can turn to the user and starts to receive voice, an image, etc. of the user, thereby allowing the user to perform behaviors such as talking to the AI apparatus. In addition, when the user gazes at the AI apparatus but does not speak, the AI apparatus can make a personified expression (for example, making a face), and can enter a non-interactive mode (for example, the AI apparatus can make the head part thereof to move back to a position before a line-of-sight-based wake-up), thereby providing user experience of high efficiency, no interference, and smoothness.

In addition, when it is determined, in the data processing step S220 based on the first data, that a time passing since the user line of sight has returned to a normal driving state reaches certain duration (for example, 10 seconds), the AI apparatus may enter the non-interactive mode (for example, a mode in which the AI apparatus can be turned off or exited from automatically, so that the head part of the AI apparatus is moved back to the position before a line-of-sight-based wake-up), thereby providing user experience of high efficiency, no interference, and smoothness. According to the vehicle interactive method 200 in the invention, the user does not need to say a specific wake-up word or manually press a physical button to activate the vehicle-mounted AI apparatus, such that the wake-up process is more natural and humanized.

In another embodiment, the execution step S230 may further include performing a function of waking up a center console screen based on line of sight: when information does not need to be output continuously via a vehicle center console screen, based on the user intention to use the vehicle center console screen, controlling the vehicle center console screen to wake up or exit from a screen saver mode; and based on the user intention to stop using the vehicle center console screen, controlling the vehicle center console screen to sleep or enter the screen saver mode. In a mode, for example, in a navigation mode, in which information needs to be output continuously via the vehicle center console screen, navigation information may be viewed by a driver at high frequency; and in most cases, when the driver views the navigation information, the navigation information needs to be fed back to the driver in time to improve driving safety. Therefore, in this case, the vehicle center console screen may be configured to be continuously on, thereby providing navigation information for the driver in time. However, the driver may alternatively customize the configuration as required, thereby meeting individual needs.

For a user who does not use navigation or even hardly uses the center console screen, keeping the screen on may be dazzling and affect driving. In a common operation, the user may enable, through a manual action or voice, the display screen to sleep or enter the screen saver mode. In the vehicle interactive method 200 according to this embodiment of the invention, to solve or at least alleviate the problem, data about user implementation may be acquired in the data acquisition step S210, and the display screen may be intelligently and naturally enabled to sleep or enter the screen saver mode, in the data processing step S220 by using a line-of-sight information-based algorithm.

In an implementation, when the function of waking up a center console screen based on a line of sight is enabled in settings, if the screen saver mode is enabled and when it is determined in the data processing step S220 that duration in which the user gazes at the ICS and the number of times the user gazes at the ICS reach certain conditions, the vehicle center console screen may be controlled in the execution step S230 to wake up or exit from the screen saver mode, thereby displaying information for the user. When the center console screen has been woken up, if it is determined in the data processing step S220 that the user does not gaze at the center console screen or does not have an intention to continue using the center console screen for certain duration (for example, 10 seconds), the vehicle center console screen may be controlled to sleep or enter the screen saver mode.

Therefore, the screen saver mode of the vehicle center console screen may be controlled without manual or voice operations, which reduces operation costs and provides experience of seamless vehicle control during driving.

In still yet another embodiment, the execution step S230 may further include performing one of auxiliary decision-making functions for automated driving: based on the user intention to change a vehicle traveling path, controlling a vehicle external indication device to be enabled. The vehicle external indication device is a device configured to send an alert or an indication signal to a person who is not on the vehicle. For example, the vehicle external indication device is turn lights on the left and right sides of the vehicle. In one aspect, when the user enables the auxiliary decision-making function for automated driving, if it is detected in the data processing step S220 that the number of times the user looks at a rear-view mirror on one side of the vehicle or duration in which the user looks at a rear-view mirror on one side of the vehicle reaches a certain value, and it is determined, based on this, that the user wants to change a vehicle traveling path (for example, to change a lane, or make a turn), devices such as a turn light on one side of the vehicle may be controlled to be turned on in the execution step S230 just based on this. As the case may be, in the execution step S230, the vehicle device may alternatively be controlled more accurately in combination with other user operations.

In another aspect, in scenarios related to automated lane-changing and overtaking such as autopilot and navigate on pilot, a driver assistance system may use, as a reference for making a final decision (a vehicle control operation such as changing a lane or making a turn), a behavior that the user gazes at a rear-view mirror on one side of a direction in which a traveling path changes, to view a road condition. If the user does not gaze at a rear-view mirror, the driver assistance system can perform determination based on a manner such as turning on a turn light by the user.

Owing to the auxiliary decision-making function for automated driving, a turn light can be controlled automatically. Therefore, during driver assistance, an operation intention to change a traveling path of the vehicle can be determined even when the user does not turn on the turn light. This frees users' hands to a certain extent, further improves safety and reliability of driver assistance, and realizes experience of natural human-vehicle interaction.

In a further embodiment, the execution step S230 further includes performing a user information privacy function: based on the user intention to use a manner of processing a specific message, processing the message in a specific mode. In a common configuration, a personal device, such as a mobile phone, of a driver may be connected to the vehicle. Therefore, when the driver receives a call, a voice message, and a text message in a driving process, the message may be processed by a vehicle device via screen display, voice playing, etc., so that the driver does not need to manually operate a personal device. This avoids scenarios in which the driver is distracted and the driver controls the steering wheel with one hand. In addition, with the development of technologies, the vehicle may also receive a message. A source and an acquisition manner of the message are not limited in this specification.

However, in some cases, the vehicle is not just used by an individual or close family members. Because degrees of intimacies between different passengers and a driver are different, not all messages are suitable for public playing or display in a cabin of the vehicle. Therefore, content of the message needs to be processed in a specific manner. When the user information privacy function is enabled, when the vehicle receives a private message (for example, a call, an SMS message, or a social software message) and if it is determined in the data processing step S220 that a line of sight of the driver turns to the ICS, and/or that duration in which the driver gazes at the ICS reaches a preset condition, it may be determined in the data processing step S220 that the driver wants to process the message via the display screen. In the execution step S230, operations such as displaying a name remark, displaying a phone number, and answering a call, and turning on a loudspeaker may be performed, or operations such as controlling the center console screen to display specific content of a text message, or converting a text message into voice for playing may be performed.

If it is determined in the data processing step S220 that the driver does not respond to the message with a line of sight within certain duration, it is determined that the user does not want to disclose the specific content of the message, and processing the message may be skipped (for example, displaying detailed content of the message is skipped and the message is saved into a message center, thereby protecting user privacy) in the execution step S230. In addition, as required, when the driver does not respond to the message with a line of sight or looks at his/her own communications device, the execution step S230 may include playing the message via headphones (if the user is wearing headphones) or skip processing the message. In a vehicle with a head-up display (HUD), the execution step S230 may further include displaying part of the message content on the HUD to assist the user in determining the message content and selecting a message processing manner. Therefore, the vehicle interactive method 200 according to the invention can enhance privacy protection on personal messages of the driver, so as to avoid disclosure of personal privacy information that the driver does not want to disclose.

It should be noted that blocks in a flowchart may be performed in an exchanged order or repeatedly, or may be omitted as required. For example, although in FIG. 2, the identity determination step S240 follows the data acquisition step S210, the identity determination step S240 may occur before the data acquisition step S210, as the case may be.

According to still another aspect of the invention, a computer-readable storage medium is provided, storing program instructions executable by a processor, and when the program instructions are executed by the processor, the vehicle interactive method according to any embodiment of an aspect of the invention is performed.

According to yet another aspect of the invention, a vehicle is provided, including the vehicle interactive system according to any embodiment of an aspect of the invention.

## Claims

1. A vehicle interactive system comprising:
a data acquisition device (110) configured to acquire first data indicating a user intention, wherein the first data is data about a user line of sight;
a data processing device (120) configured to obtain the user intention based on the first data;
an execution device (130) configured to control a vehicle based on the user intention; and
an identity determination device (140) configured to determine a user identity;
the vehicle interactive system is **characterized in that** the execution device (130) is further configured to, based on the user intention to change a vehicle traveling path, control a vehicle external indication device to be enabled in the case that the identity determination device (140) determines the user identity is a driver.

2. The system according to claim 1, wherein the identity determination device (140) is further configured to:
determine the user identity based on at least one of the first data and second data reflecting the user identity.

3. The system according to any one of the preceding claims, wherein the data acquisition device (110) is at least one of an image acquisition device and a video acquisition device.

4. The system according to any one of the preceding claims, wherein the execution device (130) is further configured to:
based on the user intention to interact with a vehicle-mounted artificial intelligence (AI) apparatus, control the AI apparatus to enter an interactive mode, to respond to a user behavior; and
based on the user intention to stop interacting with the AI apparatus, control the AI apparatus to enter a non-interactive mode.

5. The system according to any one of the preceding claims, wherein the execution device (130) is further configured to:
when information does not need to be output continuously via a vehicle center console screen,
based on the user intention to use the vehicle center console screen, control the vehicle center console screen to wake up or exit from a screen saver mode; and
based on the user intention to stop using the vehicle center console screen, control the vehicle center console screen to sleep or enter the screen saver mode.

6. The system according to any one of the preceding claims, wherein the execution device (130) is further configured to:
based on the user intention to use a manner of processing a specific message, process the message in a specific mode.

7. A vehicle interactive method comprising:
a data acquisition step (S210): acquiring first data indicating a user intention, wherein the first data is data about a user line of sight;
an identity determination step (S220): determining a user identity;
a data processing step (S230): obtaining the user intention based on the first data; and
an execution step (S240): controlling a vehicle based on the user intention, the vehicle interactive method is **characterised in that** the execution step (S240) further comprises: based on the user intention to use a manner of processing a specific message, processing the message in a specific mode in the case that the identity determination step (S220) determines the user identity is a driver.

8. The method according to claim 7, wherein the execution step (S240) further comprises:
based on the user intention to interact with a vehicle-mounted artificial intelligence (AI) apparatus, controlling the AI apparatus to enter an interactive mode, to respond to a user behavior; and
based on the user intention to stop interacting with the AI apparatus, controlling the AI apparatus to enter a non-interactive mode.

9. The method according to any one of claim 7 or 8, wherein the execution step (S240) further comprises:
when information does not need to be output continuously via a vehicle center console screen,
based on the user intention to use the vehicle center console screen, controlling the vehicle center console screen to wake up or exit from a screen saver mode; and
based on the user intention to stop using the vehicle center console screen, controlling the vehicle center console screen to sleep or enter the screen saver mode.

10. The method according to any one of claims 7 to 9, wherein the execution step (S240) further comprises:
based on the user intention to change a vehicle traveling path, controlling a vehicle external indication device to be enabled.

11. A vehicle, **characterized in that**, the vehicle comprising the vehicle interactive system according to any one of claims 1 to 6.

## Patentansprüche

1. Interaktives System für ein Fahrzeug, aufweisend:
eine Datenerfassungsvorrichtung (110), die dafür ausgelegt ist, erste Daten zu erfassen, die eine Benutzerabsicht anzeigen, wobei die ersten Daten Daten über eine Benutzersichtlinie sind;
eine Datenverarbeitungsvorrichtung (120), die dafür ausgelegt ist, die Benutzerabsicht auf der Grundlage der ersten Daten zu erhalten;
eine Ausführungsvorrichtung (130), die dafür ausgelegt ist, ein Fahrzeug auf der Grundlage der Benutzerabsicht zu steuern; und
eine Identitätsbestimmungsvorrichtung (140), die dafür ausgelegt ist, eine Benutzeridentität zu bestimmen;
wobei das interaktive System für ein Fahrzeug **dadurch gekennzeichnet ist, dass**
die Ausführungsvorrichtung (130) ferner dafür ausgelegt ist, auf der Grundlage der Benutzerabsicht einen Fahrzeugfahrweg zu ändern, eine äußere Fahrzeuganzeigevorrichtung so zu steuern, dass sie in dem Fall aktiviert wird, dass die Identitätsbestimmungsvorrichtung (140) bestimmt, dass die Benutzeridentität ein Fahrer ist.

2. System nach Anspruch 1, wobei die Identitätsbestimmungsvorrichtung (140) ferner für folgenden Vorgang ausgelegt ist:
Bestimmen der Benutzeridentität auf der Grundlage von mindestens einem von den ersten Daten und den zweiten Daten, die die Benutzeridentität widerspiegeln.

3. System nach einem der vorhergehenden Ansprüche, wobei die Datenerfassungsvorrichtung (110) mindestens eines von einer Bilderfassungsvorrichtung und einer Videoerfassungsvorrichtung ist.

4. System nach einem der vorhergehenden Ansprüche, wobei die Ausführungsvorrichtung (130) ferner für folgende Vorgänge ausgelegt ist:
auf der Grundlage der Benutzerabsicht zum Interagieren mit einer fahrzeugeigenen Vorrichtung mit künstlicher Intelligenz (KI), Steuern der KI-Vorrichtung zum Eintreten in einen interaktiven Modus, um auf ein Benutzerverhalten zu reagieren; und
auf der Grundlage der Benutzerabsicht zum Beenden des Interagierens mit der KI-Vorrichtung, Steuern der KI-Vorrichtung zum Eintreten in einen nicht-interaktiven Modus.

5. System nach einem der vorhergehenden Ansprüche, wobei die Ausführungsvorrichtung (130) ferner für folgende Vorgänge ausgelegt ist:
wenn Informationen nicht kontinuierlich über einen Bildschirm in der Fahrzeugmittelkonsole ausgegeben werden müssen,
auf der Grundlage der Benutzerabsicht, den Bildschirm der Fahrzeugmittelkonsole zu verwenden, Steuern des Bildschirms der Fahrzeugmittelkonsole zum Aktivieren des Bildschirms oder zum Beenden eines Bildschirmschonermodus; und
auf der Grundlage der Benutzerabsicht, den Bildschirm der Fahrzeugmittelkonsole nicht mehr zu verwenden, Steuern des Bildschirms der Fahrzeugmittelkonsole zum Deaktivieren des Bildschirms oder zum Eintreten in einen Bildschirmschonermodus.

6. System nach einem der vorhergehenden Ansprüche, wobei die Ausführungsvorrichtung (130) ferner für folgenden Vorgang ausgelegt ist:
auf der Grundlage der Benutzerabsicht, eine Art und Weise des Verarbeitens einer spezifischen Nachricht zu verwenden, Verarbeiten der Nachricht in einem spezifischen Modus.

7. Interaktives Verfahren für ein Fahrzeug, umfassend:
einen Datenerfassungsschritt (S210): Erfassen von ersten Daten, die eine Benutzerabsicht anzeigen, wobei die ersten Daten Daten über eine Benutzersichtlinie sind;
einen Identitätsbestimmungsschritt (S220): Bestimmen einer Benutzeridentität;
einen Datenverarbeitungsschritt (S230): Erhalten der Benutzerabsicht auf der Grundlage der ersten Daten; und
einen Ausführungsschritt (S240): Steuern eines Fahrzeugs auf der Grundlage der Benutzerabsicht,
wobei das interaktive Verfahren für ein Fahrzeug **dadurch gekennzeichnet ist, dass**
der Ausführungsschritt (S240) ferner umfasst: auf der Grundlage der Benutzerabsicht, eine Art und Weise zum Verarbeiten einer spezifischen Nachricht zu verwenden, Verarbeiten der Nachricht in einem spezifischen Modus in dem Fall, dass der Identitätsbestimmungsschritt (S220) bestimmt, dass die Benutzeridentität ein Fahrer ist.

8. Verfahren nach Anspruch 7, wobei der Ausführungsschritt (S240) ferner umfasst:
auf der Grundlage der Benutzerabsicht zum Interagieren mit einer fahrzeugeigenen Vorrichtung mit künstlicher Intelligenz (KI), Steuern der KI-Vorrichtung zum Eintreten in einen interaktiven Modus, um auf ein Benutzerverhalten zu reagieren; und
auf der Grundlage der Benutzerabsicht zum Beenden des Interagierens mit der KI-Vorrichtung, Steuern der KI-Vorrichtung zum Eintreten in einen nicht-interaktiven Modus.

9. Verfahren nach einem der Ansprüche 7 oder 8, wobei der Ausführungsschritt (S240) ferner umfasst:
wenn Informationen nicht kontinuierlich über einen Bildschirm in der Fahrzeugmittelkonsole ausgegeben werden müssen,
auf der Grundlage der Benutzerabsicht, den Bildschirm der Fahrzeugmittelkonsole zu verwenden, Steuern des Bildschirms der Fahrzeugmittelkonsole zum Aktivieren des Bildschirms oder zum Beenden eines Bildschirmschonermodus; und
auf der Grundlage der Benutzerabsicht, den Bildschirm der Fahrzeugmittelkonsole nicht mehr zu verwenden, Steuern des Bildschirms der Fahrzeugmittelkonsole zum Deaktivieren des Bildschirms oder zum Eintreten in einen Bildschirmschonermodus.

10. Verfahren nach einem der Ansprüche 7 bis 9, wobei der Ausführungsschritt (S240) ferner umfasst:
auf der Grundlage der Benutzerabsicht zum Ändern eines Fahrzeugfahrwegs, Steuern einer äußeren Fahrzeuganzeigevorrichtung zur Aktivierung.

11. Fahrzeug, **dadurch gekennzeichnet, dass** das Fahrzeug das interaktive System nach einem der Ansprüche 1 bis 6 aufweist.

## Revendications

1. Système interactif de véhicule comprenant :
un dispositif d'acquisition de données (110), configuré de façon à acquérir des premières données indiquant une intention d'un utilisateur, ces premières données étant des données à propos de la ligne visuelle d'un utilisateur ;
un dispositif de traitement de données (120) configuré de façon à obtenir l'intention de l'utilisateur en se basant sur les premières données ;
un dispositif d'exécution (130) configuré de façon à commander un véhicule en se basant sur l'intention de l'utilisateur ; et
un dispositif de détermination d'identité (140) configuré de façon à déterminer l'identité d'un utilisateur ;
ce système interactif de véhicule étant **caractérisé en ce que**
le dispositif d'exécution (130) est configuré en outre de façon à, en se basant sur l'intention de l'utilisateur de changer un trajet de déplacement du véhicule, commander un dispositif d'indication externe du véhicule pour qu'il soit activé dans le cas où le dispositif de détermination d'identité (140) détermine que l'identité de l'utilisateur est un conducteur.

2. Système selon la revendication 1, dans lequel le dispositif de détermination d'identité (140) est configuré en outre de façon à :
déterminer l'identité de l'utilisateur en se basant sur l'un des premières donnéeset des deuxièmes données reflétant l'identité de l'utilisateur.

3. Système selon l'une quelconque des revendications précédentes, dans lequel le dispositif d'acquisition de données (110) est au moins l'un d'un dispositif d'acquisition d'images et d'un dispositif d'acquisition de vidéos.

4. Système selon l'une quelconque des revendications précédentes, dans lequel le dispositif d'exécution (130) est configuré en outre de façon à :
en se basant sur l'intention de l'utilisateur d'interagir avec une intelligence artificielle (AI) montée sur le véhicule, commander l'appareil AI pour qu'il entre dans un mode interactif, afin de répondre à un comportement de l'utilisateur ; et
en se basant sur l'intention de l'utilisateur d'arrêter d'interagir avec l'appareil AI, commander l'appareil AI pour qu'il entre dans un mode non interactif.

5. Système selon l'une quelconque des revendications précédentes, dans lequel le dispositif d'exécution (130) est configuré en outre de façon à :
lorsque les informations n'ont pas besoin d'être fournies continuellement via un écran sur la console centrale du véhicule,
en se basant sur l'intention de l'utilisateur d'utiliser l'écran sur la console centrale du véhicule, commander l'écran sur la console centrale du véhicule pour qu'il sorte du mode de veille ou du mode économiseur d'écran ; et
en se basant sur l'intention de l'utilisateur d'arrêter d'utiliser l'écran sur la console centrale du véhicule, commander l'écran sur la console centrale du véhicule pour qu'il entre dans le mode veille ou dans le mode économiseur d'écran.

6. Système selon l'une quelconque des revendications précédentes, dans lequel le dispositif d'exécution (130) est configuré en outre de façon à :
en se basant sur l'intention de l'utilisateur d'utiliser une manière de traiter un message spécifique, traiter ce message dans un mode spécifique.

7. Procédé interactif de véhicule comprenant :
une étape d'acquisition de données (S210) : l'acquisition de premières données indiquant une intention d'un utilisateur, ces premières données étant des données à propos d'une ligne visuelle d'un utilisateur ;
une étape de détermination d'identité (S220) : la détermination de l'identité d'un utilisateur ;
une étape de traitement des données (S230) : l'obtention de l'intention de l'utilisateur en se basant sur les premières données ; et
une étape d'exécution (S240) : la commande d'un véhicule en se basant sur l'intention de l'utilisateur,
ce procédé interactif de véhicule étant **caractérisé en ce que**
l'étape d'exécution (S240) comprend en outre : en se basant sur l'intention de l'utilisateur d'utiliser une manière de traitement d'un message spécifique, le traitement de ce message dans un mode spécifique dans le cas où l'étape de détermination de l'identité (S220) détermine que l'identité de l'utilisateur est un conducteur.

8. Procédé selon la revendication 7, dans lequel l'étape d'exécution (S240) comprend en outre :
en se basant sur l'intention de l'utilisateur d'interagir avec une intelligence artificielle (AI) montée sur le véhicule, la commande de l'appareil AI pour qu'il entre dans un mode interactif, afin de répondre à un comportement de l'utilisateur ; et
en se basant sur l'intention de l'utilisateur d'arrêter d'interagir avec l'appareil AI, la commande de l'appareil AI pour qu'il entre dans un mode non interactif.

9. Procédé selon l'une quelconque des revendications 7 ou 8, dans lequel l'étape d'exécution (S240) comprend en outre :
lorsque les informations n'ont pas besoin d'être fournies continuellement via un écran sur la console centrale du véhicule,
en se basant sur l'intention de l'utilisateur d'utiliser l'écran sur la console centrale du véhicule, la commande de l'écran sur la console centrale du véhicule pour qu'il sorte du mode de veille ou du mode économiseur d'écran ; et
en se basant sur l'intention de l'utilisateur d'arrêter d'utiliser l'écran sur la console centrale du véhicule, la commande de l'écran sur la console centrale du véhicule pour qu'il entre dans le mode veille ou dans le mode économiseur d'écran.

10. Procédé selon l'une quelconque des revendications 7 à 9, dans lequel l'étape d'exécution (S240) comprend en outre :
en se basant sur l'intention de l'utilisateur de changer un trajet de déplacement du véhicule, la commande d'un dispositif d'indication externe du véhicule pour l'activation.

11. Véhicule, **caractérisé en ce que** ce véhicule comporte le système interactif de véhicule selon l'une quelconque des revendications 1 à 6.
